# EUROPÄISCHE PATENTANMELDUNG

(11) **EP 1 536 317 A2**
(43) Veröffentlichungstag der Anmeldung: **01.06.2005**
(21) Anmeldenummer: 04078247.6
(22) Anmeldetag: 24.11.2004
(51) Int. Cl.: G06F 3/033

(54) **Mousepad**

(30) Priorität: 25.11.2003 DE 20318374 U
(71) Anmelder: Sohn, Ingmar, 12159 Berlin (DE); Heisig, Sven, 12161 Berlin (DE)
(72) Erfinder: Sohn, Ingmar, 12159 Berlin (DE); Heisig, Sven, 12161 Berlin (DE)
(74) Vertreter: Scholz, Hartmut, Dipl.-Ing.

(57) **Zusammenfassung**

Mousepad (10) als Bewegungsunterlage für Computermäuse, mit einer biegesteifen Trägerplatte (11), auf die eine mit einer Aufrauung versehene Beschichtung (12) aufgetragen ist. Die Beschichtung (12) besteht aus Polytetrafluorethylen.

## Beschreibung

Die Erfindung betrifft ein Mousepad als Bewegungsunterlage für Computermäuse, mit einer biegesteifen Trägerplatte, auf die eine mit einer Aufrauung versehene Beschichtung aufgetragen ist.

Derartige Mousepads werden als Gleitunterlagen und zur Schonung von Handsteuerungsgeräten von Computern, so genannten Computermäusen, vielfältig eingesetzt. Computermäuse steuern mittels eines Rollelements, nämlich einer Kugel, oder quasi berührungslos über opto-elektronische Abtastung. Sie sollen einerseits eine gewisse Härte und Oberflächenrauhigkeit aufweisen, um bei einem Rollelement ausgerüsteten Mäusen einen ausreichend hohen Reibungswiderstand zu bieten, andererseits sollen sie bei berührungsloser über opto-elektronischen Abtastung jede Bewegung erkennen und exakt wieder geben können. Außerdem sollen sie hand- und grifffreundlich sein.

Aus der DE 299 15 203 U1 ist dazu ein Mousepad bekannt, das aus hypoallergenem, pflanzengegerbtem Leder besteht. Aus der DE 298 22 273 U1 ist ein Mousepad bekannt, das aus Glas, Metall, Keramik, Holz oder Verbundwerkstoffen bestehen soll. Diese Werkstoffe weisen zwar eine recht harte Oberfläche auf, sie sind aber zu glatt, um einen ausreichenden Reibwiderstand zu bieten.

Schließlich ist aus der DE 298 00 298 U1 ein Mousepad aus biologisch nachwachsend, verrottbarem Material bekannt. Diese bekannten Mousepads weisen eine sehr glatte Oberfläche auf, die eine exakte Steuerung nicht möglich ist, oder sie sind so weich, dass es zu Fehlsteuerungen kommen kann.

Aufgabe der vorliegenden Erfindung ist es, ein Mousepad der eingangs beschriebenen Art zu schaffen, das auch bei sehr hohen Bewegungsgeschwindigkeiten, insbesondere mit rollkörperfreien Computermäusen, eine exakte Steuerung ermöglicht.

Gelöst wird diese Aufgabe dadurch, dass die Beschichtung aus Polytetrafluorethylen besteht. Insbesondere ist es vorgesehen, dass die Beschichtung aus Polytetrafluorethylen, vorzugsweise aus aufgesintertem Polytetrafluorethylen besteht. Eine andere Ausführung sieht ein Mousepad als Bewegungsunterlage für Computermäuse vor, das aus einer einstückigen, biegesteifen Trägerplatte aus Polytetrafluorethylen besteht und eine, mit einer Aufrauung versehene Oberfläche aufweist.

Durch diese Maßnahmen wird ein Mousepad geschaffen, mit dem Steuerungen sowohl mit Rollkörpermäusen als auch durch berührungslose opto-elektronische Abtastung im Mikrosekundenbereich möglich sind. Es hat sich gezeigt, dass Polytetrafluorethylen besonders bei einer opto-elektronischen Abtastung eine exakte Ansteuerung eines Computers ermöglicht.

Weitere vorteilhafte Maßnahmen sind in den Unteransprüchen beschrieben. Die Erfindung ist in der beiliegenden Zeichnung dargestellt und wird nachfolgend näher beschrieben; es zeigt:
- **Figur 1**: die Draufsicht auf ein schematisch dargestelltes Mousepad;
- **Figur 2**: die Seitenansicht eines Mousepads nach der Figur 1.

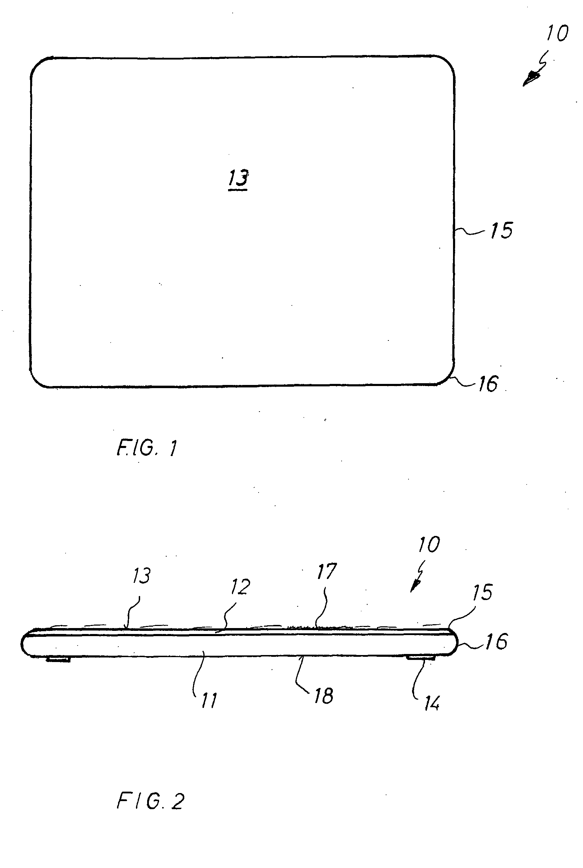

Das in der Figur 1 schematisch dargestellte Mousepad 10 besteht im Wesentlichen aus einer biegesteifen Trägerplatte 11, auf die, wie die Figur 2 zeigt, eine Beschichtung 12 aufgetragen ist. Die Beschichtung 12 weist eine Oberfläche 13 auf, die mit einer Aufrauung 17 versehen ist. Um Verletzungen zu vermeiden, können die Kanten 15 des Mousepads 10 mit Abrundungen 16 versehen sein.

Die Beschichtung 12 besteht aus einem Polytetrafluorethylen und kann beispielsweise in Pulverform auf die Trägerplatte 11 aufgetragen und dann gesintert sein. Ebenso kann eine Polytetrafluorethylengewebefolie auf die Trägerplatte 11 aufgeklebt sein. Die Polytetrafluorethylengewebefolie kann selbstklebend ausgebildet sein.

Durch die Sinterung bei ca. 200°C bis 260°C kann eine natürliche, unregelmäßige Aufrauung 17, deren Tiefe das 0,1 bis 0,5fache der Schichtdicke der Beschichtung 12 beträgt, erzielt werden. Die Beschichtung 12 weist eine Schichtdicke von 0,1 bis 0,5 mm auf.

Die Trägerplatte 11 besteht aus einem biegesteifen Material, beispielsweise einem Leichtmetall- oder Stahlblech oder aus einem Kunststoff. Auf ihrer der Beschichtung 12 gegenüber liegenden Unterseite 18 kann die Trägerplatte 11 mit rutschfesten Noppen 14 versehen sein.

Die rutschfesten Noppen 14 bestehen aus einem Elastomer und sind beispielsweise aufgeklebt. Sie sollen verhindern, dass bei schnellen Bewegungen einer - nicht dargestellten - Computermaus auf der Beschichtung 12 das Mousepad 10 verrutscht.

Bei Computerspielen kommt es oft auf extrem schnelle Reaktionen der Spieler an. Die dabei ausgeführten Handbewegungen sollen praktisch ohne merkliche Verzögerung auf den Computer übertragen werden. Diese Steuerungserkennung erfolgt üblicherweise durch mit opto-elektronischen Abtastmitteln versehenen Mäusen. Zur Verbesserung derartiger Abtastungen ist es vorgesehen, die Polytetrafluorethylenbeschichtung 12 dunkel einzufärben.

Bei einer anderen Ausführung ist es vorgesehen, dass das gesamte Mousepad 10 durchgängig, einstückig aus einem Polytetrafluorethylen besteht. Insbesondere besteht es aus einem eingefärbten Polytetrafluorethylen, dessen Oberfläche 13 mit einer Aufrauung 17 versehen ist.

### Bezugszeichen

- 10: Mousepad
- 11: Trägerplatte
- 12: Beschichtung
- 13: Oberfläche
- 14: rutschfeste Noppe
- 15: Kante
- 16: Abrundung
- 17: Aufrauung
- 18: Unterseite

## Patentansprüche

1. Mousepad als Bewegungsunterlage für Computermäuse, mit einer biegesteifen Trägerplatte, auf die eine mit einer Aufrauung versehene Beschichtung aufgetragen ist, **dadurch gekennzeichnet, dass** die Beschichtung (12) aus Polytetrafluorethylen besteht.

2. Mousepad nach dem Anspruch 1, **dadurch gekennzeichnet, dass** die Beschichtung (12) aus einer aufgesinterten Pulverschicht aus Polytetrafluorethylen besteht.

3. Mousepad nach den Ansprüchen 1 und 2, **dadurch gekennzeichnet, dass** die Aufrauung (17) der Beschichtung (12) unregelmäßig ausgebildet ist.

4. Mousepad nach den Ansprüchen 1 bis 3, **dadurch gekennzeichnet, dass** die Trägerplatte (11) aus einem Metallblech besteht.

5. Mousepad nach den Ansprüchen 1 bis 4, **dadurch gekennzeichnet, dass** die Trägerplatte (11) aus einem Leichtmetall besteht.

6. Mousepad nach den Ansprüchen 1 bis 5, **dadurch gekennzeichnet, dass** die Trägerplatte (11) aus einem temperaturbeständigen Kunststoff besteht.

7. Mousepad nach den Ansprüchen 1 bis 6, **dadurch gekennzeichnet, dass** die Trägerplatte (11) etwa zehn bis zwanzig Mal dicker als die Beschichtung (12) ist.

8. Mousepad nach den Ansprüchen 1 bis 7, **dadurch gekennzeichnet, dass** die Beschichtung (12) ca. 0,1 bis 0,5 mm stark ist.

9. Mousepad nach den Ansprüchen 1 bis 8, **dadurch gekennzeichnet, dass** das Polytetrafluorethylen (12) dunkel eingefärbt ist.

10. Mousepad als Bewegungsunterlage für Computermäuse, das aus einer einstückigen, biegesteifen Trägerplatte (11) aus Polytetrafluorethylen besteht und eine, mit einer Aufrauung (17) versehene Oberfläche (13) aufweist.
